# EUROPEAN PATENT APPLICATION

(11) **EP 1 048 394 A2**
(43) Date of publication of application: **02.11.2000**
(21) Application number: 00107846.8
(22) Date of filing: 12.04.2000
(51) Int. Cl.: B23P 21/00, B23P 19/04

(54) **Robotized assembly method for products**

(30) Priority: 20.04.1999 IT TO990310
(71) Applicant: Germano, Bruno, 10024 Moncalieri (TO) (IT); Gioia, Paolo, 10133 Torino (IT) (IT)
(72) Inventor: Germano, Bruno, 10024 Moncalieri (TO) (IT); Gioia, Paolo, 10133 Torino (IT) (IT)
(74) Representative: Lotti, Giorgio

(57) **Abstract**

Robotized assembly method for products (2), according to which a product (2) undergoes a first and a second assembly phase in an assembly configuration for each phase, and is moved from a first assembly station (S1) to a second assembly station (S2) by means of a robot (3) provided with a handling tool (5) of the product (2); the two assembly phases being carried out with the same assembly tool (14) which is moved, during the first assembly phase, by the robot (3), and is mounted, during the second assembly phase, on a bearing bench (12) placed in the second assembly station (S2).

## Description

The present invention relates to a robotized assembly method for products.

The method of the present invention finds an advantageous application in the field of the mechanical industry, and, more particularly, in the field of the robotized assembly lines for cars, to which the following explanation will make specific reference without in any way losing any of its generality.

Robotized lines comprise a number of assembly areas, which are placed parallel or in sequence to each other along a feed path of the products, and eachone is provided with at least one handling robot able to perform a given number of operations on each product.

The well known assembly areas normally comprise a handling robot with N degrees of freedom, a bearing bench to support the product in a given first assembly configuration, and two assembly tools controlled by respective control units, a first tool of which is directly handled by the robot, while a second tool of which is mounted on a relevant bearing branch.

The presence of the two aforementioned tools is made necessary due to the fact that once the robot ends a starting assembly phase of the product, known also as a tacking phase, the product must be oriented in a given second assembly configuration to undergo a final assembly phase. More particularly, between the two assembly phases, the robot puts down the first assembly tool on a relevant bearing branch, picks up a handling tool for the product, picks up the product with the handling tool, and faces the product to the second assembly tool in the second assembly configuration.

From what has been mentioned above, it appears clear that, even if the handling and flexibility characteristics of the robot are widely exploited, the presence of the two tools and of the relevant bearing benches has an high degree of influence on the investment costs for the execution of the single assembly area and, therefore, of the whole robotized line.

Furthermore, in accordance with the internal rules of some car manufacturers, each tool must be only and exclusively handled by a relevant robot with the drawback of increasing the number of robots for each single assembly area, as well as the aforementioned investment costs.

It is an object of the present invention to provide a robotized assembly method for products, which permits the aforementioned drawbacks to be avoided in an economic and simple way.

According to one aspect of the invention, a robotized assembly method for products there is provided, the method comprises a first and a second assembly phase of a product placed, for each assembly phase, in a respective assembly configuration; and a handling phase of the product from a first assembly station to a second assembly station by means of a robot which is provided with holding means to hold the product between the two said configurations; the method being characterised by the fact that said assembly phases are carried out using one same assembly tool which is set in motion by the robot during the first assembly phase, and is mounted, during the second assembly phase, on a bearing bench placed inside the second assembly station.

A preferred and non-limiting embodiment of the invention will now be described with reference to the accompanying drawings, in which:
FIG. 1 shows an outline of a preferred embodiment of an assembly unit carrying out the method of the present invention; and
FIGG. 2-6 show an outline of a sequence of operative configurations of the unit in FIG. 1.

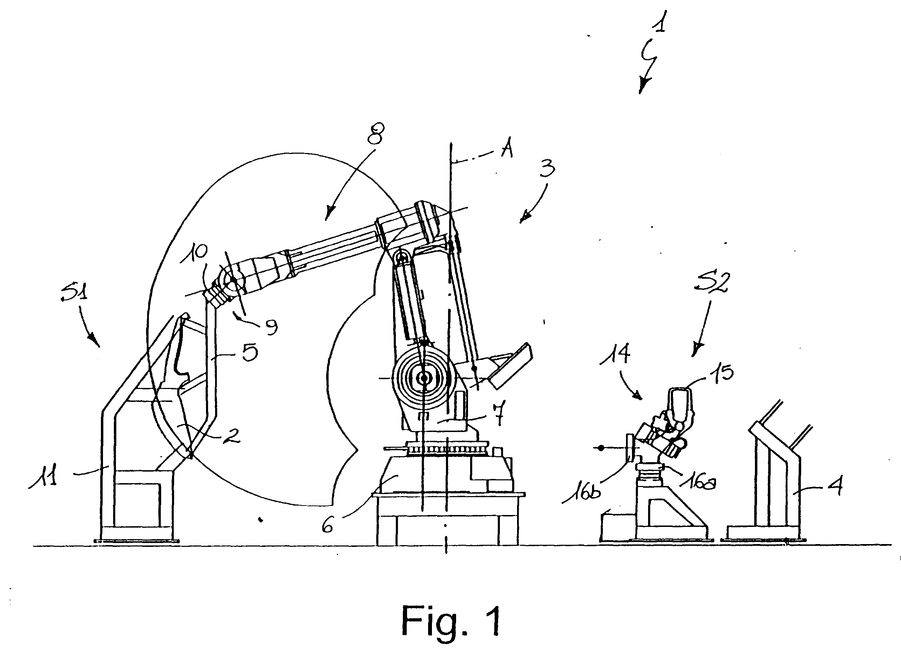

With reference to figure 1, the number 1 indicates, in its entirety, a robotized assembly unit for shaped metallic panels 2.

Unit 1 comprises a handling robot 3 with N degrees of freedom, two assembly stations S1 and S2 of the panel 2 placed inside a working area of the robot 3, and a bearing bench 4 for a handling tool 5 of the panel 2.

The robot 3 is a well known robot of the kind normally used in robotized production lines, and comprises a machine bed 6, a centre pillar 7 able to rotate around a vertical rotation axis A, an double-elbow articulated arm 8 supported by pillar 7 in a rotating way, and a tool holder head 9. The head 9 is placed just next to a free end portion of the arm 8, and is provided with a coupling flange 10 for the tool 5.

The station S1 comprises a bearing bench 11 which is able to support the panel 2 in a first assembly configuration, and the station S2 comprises a further bearing bench 12 which is placed in an intermediate position between the robot 3 and the bench 4 and is provided with a coupling flange 13 exactly like the flange 10. The station S2 has got an assembly tool 14, which is defined, in the embodiment shown, by a welding tool, which comprises two resistance-welding electrodes 15 and two identical coupling flanges 16, one of which is opposite the electrodes 15.

The two flanges 16, indicated with the letters "a" and "b", are placed on respective right-angled lying planes, and when during use the tool 14 is placed in the station S2, the flange 16a engages the flange 13 in the bench 12, meanwhile the flange 16b engages the flange 10 of the robot 3.

In use, the unit 1 is controlled by a numerical control unit of a well known kind and not illustrated, while the head 14 is controlled by a control unit 17 both when the head 14 is mounted on the robot 3, and when the head 14 is mounted on the bench 12.

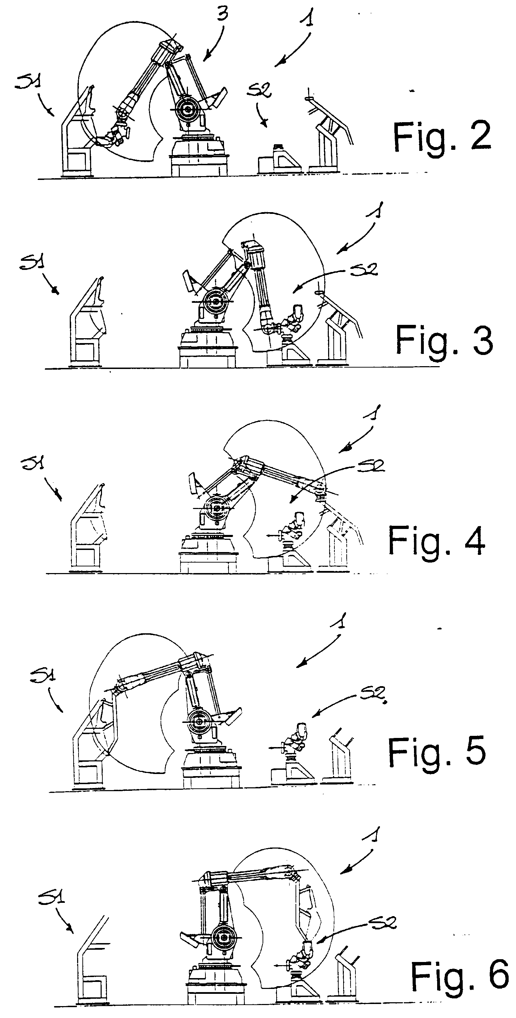

The functioning of the unit 1 will now be described with reference to figures 2-6, and from the moment in which a panel 2 is supported on the bench 11 in its first assembly configuration, the tool 5 is mounted on the bench 4, and the tool 14 is mounted on the robot 3 with its relevant flange 16b joined to the flange 10 of the robot 3.

Beginning from this moment, the robot 3 positions the tool 14 in the station S1, and the control unit 17, in synergy with the aforementioned numerical control unit, makes the head 9 of the robot 3 move with respect to the panel 2 and the tool 14 completing a first assembly cycle of the panel 2. More particularly, this first cycle consists of a so called tacking phase of the panel 2, during which the movements of the tool 14 are rather limited by the restriction elements of the bench 11.

When the tacking phase is ended, the robot 3 brings the tool 14 to the station S2 facing the flange 16a to the flange 13 and engaging the tool 14 to the bench 12. Once the tool 14 is firmly joined to the bench 12, the head 9 disengages itself from the tool 14, and it is moved towards the tool 5.

Once the connection between the head 9 and the tool 5 has been carried out, the latter is moved to pick up the panel 2 in the station S1 to bring the panel to the station S2 positioning the panel 2 in a second assembly configuration at the same time.

Once the panel 2 has been placed in the station S2, the unit 17, which had controlled the tool 14 on the head 9 of the robot 3 before, again controls the tool 14 so as to activate the tool 14 in synergy with the movement of the panel 2 held by the tool 5 to make the tool 14 complete a second assembly cycle of the panel 2.

From what has been mentioned above, it appears clear that the result of the above-described method is that the utilisation of a second tool 14 and of another bearing branch is avoided, as well as a second control unit 17, causing a considerable reduction in investment costs.

While a specific embodiment of the invention has been disclosed, it is to be understood that such disclosure has been merely for the purpose of illustration and that the invention is not to be limited in any manner thereby. Various modifications will be apparent to those skilled in the art in view of the foregoing example.

## Claims

1. Robotized assembly method for products (2), the method comprises a first and a second assembly phase of a product (2) placed, for each assembly phase, in a respective assembly configuration; and a handling phase of the product (2) from a first assembly station (S1) to a second assembly station (S2) by means of a robot (3) which is provided with holding means (5) to hold the product (2) between the two said configurations; the method being characterised by the fact that said assembly phases are carried out using the same assembly tool (14) which is set in motion by the robot (3) during the first assembly phase, and is mounted, during the second assembly phase, on a bearing bench (12) placed inside the second assembly station (S2).

2. Method as claimed in claim 1, characterised by the fact that it comprises, after the first assembly phase, a mounting phase of said assembly tool (14) on the bearing bench (12).

3. Method as claimed in claim 1 or 2, characterised by the fact that it comprises a first control phase of the tool (14) during the first assembly phase, and a second control phase of the tool (14) during the second assembly phase; the two control phases providing for the using of an identical control unit (17) for the tool (14).
